**Europäisches Patentamt**

**European Patent Office**

**Office européen des brevets**

(11) Numéro de publication: **0 192 570**
**A1**

(12) **DEMANDE DE BREVET EUROPEEN**

(21) Numéro de dépôt: **86400335.5**

(22) Date de dépôt: **18.02.86**

(51) Int. Cl.⁴: **G 02 B 6/44**

(30) Priorité: **21.02.85 FR 8502706**

(43) Date de publication de la demande:
**27.08.86 Bulletin 86/35**

(84) Etats contractants désignés:
**BE CH DE GB IT LI**

(71) Demandeur: **Le Noane, Georges**
**Kerrougant Bras**
**F-22730 Tregastel(FR)**

(72) Inventeur: **Le Noane, Georges**
**Kerrougant Bras**
**F-22730 Tregastel(FR)**

(74) Mandataire: **Ahner, Francis et al,**
**CABINET REGIMBEAU 26, avenue Kléber**
**F-75116 Paris(FR)**

(54) Eléments de renforcement composites et procédés pour leur fabrication.

㊶ L'invention concerne un élément de renforcement composite, en particulier, un câble de renforcement caractérisé en ce qu'il comporte une âme constituée d'un fil de matière non métallique, ladite âme étant enrobée dans un polymère renforcé. L'invention concerne également son procédé de fabrication par lequel on file une matière métallique (11) dans une zone de filage (14), on enrobe le fil (16) en appliquant autour du fil le liant polymérisable et les fibres (22), (23), et on durcit l'élément composite (30) obtenu.

FIG-5

EP 0 192 570 A1

# ELEMENTS DE RENFORCEMENT COMPOSITES ET PROCEDES POUR LEUR FABRICATION

La présente invention se rapporte d'une manière générale aux éléments de renforcement et à des procédés pour leur préparation, et plus particulièrement à des éléments de renforcement non métalliques destinés à de multiples applications. Ils peuvent être notamment utilisés dans les bétons armés, les plastiques renforcés, et dans la réalisation de câbles à fibres optiques où il est particulièrement important de disposer d'éléments de renforcement sans partie métallique.

On entend par éléments de renforcement, des éléments généralement de forme cylindrique destinés à renforcer la résistance à la traction et/ou à la compression d'un matériau.

Bien que les éléments de renforcement selon la présente invention puissent être utilisés pour diverses applications, ils seront plus particulièrement décrits en se référant à leur application dans les câbles à fibres optiques.

D'une façon générale, un câble de transmission par fibres optiques peut présenter des structures très variées, mais, à titre d'illustration, on peut rappeler une structure assez connue.

Un tel câble est constitué d'un support cylindrique ou jonc, creusé sur son pourtour de rainures longitudinales ou hélicoïdales dans lesquelles viennent se placer les fibres optiques.

Le support cylindrique comporte le long de son axe un élément de renforcement qui assure l'essentiel de la résistance mécanique du câble.

L'ensemble est, bien entendu, logé dans une gaine qui assure la protection des fibres optiques.

Les éléments de renforcement peuvent, dans certains cas, être disposés à l'intérieur de cette gaine, en plus ou à la place de l'élément de renforcement axial.

Il est demandé à ces éléments de renforcement d'accroître la résistance à la traction et à la compression des divers éléments qui constituent le câble afin d'éviter les retraits et la relaxation des éléments du câble et afin de leur permettre de supporter les efforts de traction importants pouvant intervenir, en particulier lors de la pose des câbles.

Dans le cas des câbles optiques, il s'est très rapidement révélé intéressant de pouvoir utiliser des éléments de renforcement non métalliques. Ces éléments de renforcement non métalliques sont, généralement, composés de fils préalablement tressés ou non de verre ou de kevlar imprégnés d'une résine polymérisable ; ces fils sont souvent obtenus par un procédé de pultrusion.

Des réalisations sont actuellement à l'étude mettant en oeuvre des matières thermoplastiques, mais les résultats sont encore imparfaits.

Ces produits, s'ils se comportent généralement bien ou moyennement à la traction et à la compression, en tous cas de façon suffisante pour la plupart des applications, présentent quand même un inconvénient majeur, à savoir, leur coût de fabrication. Ce coût de fabrication très élevé rend actuellement très problématique leur utilisation dans des produits tels que les câbles à fibres optiques. En effet, la dimension de ces fils de renforcement, variant généralement de 500 μm à 2 mm au plus, nécessite, pour obtenir une bonne homogénéité de l'ensemble, des précautions très importantes au moment de l'amalgame des fils avec la résine, polymérisable, ce qui impose des vitesses de fabrication extrêmement faibles (environ 2 m/min). Cette vitesse de fabrication faible, à elle seule, justifie le coût très élevé de ces éléments de renforcement. On peut, en effet, estimer que le coût "matière" est à peine le dixième du coût "main-d'oeuvre"/machine d'un tel produit.

En ce qui concerne les procédés encore à l'étude mettant en oeuvre des résines thermoplastiques, on se heurte à une autre difficulté qui est de lier les différents composants pour obtenir un produit ayant de bonnes caractéristiques mécaniques, notamment à la flexion, à la traction et à la compression.

La présente invention a donc pour but d'obtenir des éléments de renforcement non-métalliques de qualité sensiblement équivalente aux meilleurs produits connus actuellement obtenus par pultrusion, mais à des coûts nettement moindres et obtenus grâce à un procédé industriel nouveau intégré et permettant des vitesses de fabrication élevées.

Il est connu de réaliser des fibres optiques renforcées, telles que décrites par exemples dans la demande de brevet japonaise JP-A-58 82205, publiée le 17 mai 1983.

Le problème majeur pour de telles fibres est la bonne conservation des caractéristiques de transmission et des propriétés mécaniques de la fibre optique centrale.

De même, les demandes de brevet EP-0 113 377, FR 2 509 872, FR 2 483 628 et le brevet US 4 331 378 concernent des câbles ou fibres optiques.

L'objet de la présente invention s'en distingue nettement puisqu'il ne s'agit pas ici de fibres optiques.

Plus particulièrement, la présente invention concerne un élément de renforcement, en particulier un câble de renforcement, en matériau composite caractérisé en ce qu'il comporte une âme constituée par un fil de matière non-métallique, ladite âme étant enrobée dans un polymère renforcé.

Sans ce fil central, il est nécessaire d'employer les procédés lents et coûteux évoqués ci-dessus pour obtenir une tenue mécanique du composite satisfaisante.

Les éléments de renforcement selon l'invention présentent en général un diamètre de 0,3 à 2 mm, bien que des diamètres différents puissent être envisagés.

De préférence, le polymère est constitué d'un polymère dans lequel sont noyées des fibres de verre ou autre matière non-métallique telle que fibres de kevlar, de carbone, de graphite ou de bore. Ces fibres de renforcement seront, de préférence continues, et non sous forme de fibres coupées, étant bien entendu que la notion de continuité présente des limites pratiques (capacité des bobines, par exemple). Ces fibres peuvent présenter diverses structures, elles peuvent être monobrin, mais également se présenter sous forme torsadée, toronnée ou tressée ; si cela est nécessaire on peut même envisager l'utilisation, en guise de fibres de renforcement des "mats" non tissées.

Il convient de préciser ici que les fibres de renforcement sont constituées de brins de diamètre beaucoup plus faible que le diamètre du fil enrobé, ceci pour pouvoir être amalgamées facilement avec la résine.

Ces fibres de renforcement noyées dans le polymère peuvent être groupées de différentes façons, en tresses ou en torons, par exemple, ces fibres étant disposées autour du fil central parallèlement à l'axe du fil central et/ou en hélice de même axe que le fil central, selon un ou plusieurs cylindres concentriques de même axe que le fil, comme cela apparaît dans la description détaillée. Le nombre et la disposition des fibres monobrin, torsadées, tressées ou toronnées dans la (les) couche(s) concentrique(s) et le nombre de couches autour du fil central dépendent de l'usage ultérieur de l'élément de renforcement et des caractéristiques de rigidité, flexion, résistance qu'on en attend. La disposition torsadée assure à l'élément de renforcement obtenu plus de flexibilité.

Les résines mises en oeuvre peuvent être très variées; il s'agira, en général, de résines réticulables telles que les résines époxydes, par exemple les époxyacrylates, qui sont préférées, mais il est possible d'utiliser d'autres résines telles que les polyesters. Dans certains cas, on peut même envisager d'utiliser des résines thermoplastiques.

Le choix de la résine à une influence sur les caractéristiques mécaniques de l'élément de renforcement obtenu, notamment sur ses caractéristiques d'allongement à la rupture.

Comme on le verra ci-après, le procédé mis en oeuvre varie suivant la nature de la résine utilisée.

Le fil de matière non-métallique qui constitue l'âme de l'élément de renforcement est, de préférence, en verre ou en silice. Ce fil peut avoir une résistance à la traction initiale suffisante pour garantir un module adapté pour l'élément de renforcement obtenu et sa présence assure à l'ensemble une bonne résistance à la flexion.

En outre, comme on le verra ci-après, il facilite la mise en oeuvre du procédé de réalisation des éléments de renforcement en permettant des vitesses de fabrication importantes.

A cette fin, l'invention concerne aussi le procédé de fabrication qui prévoit l'intégration complète de la fabrication du composite à partir d'un fil de verre ou de silice obtenu directement par étirage d'une barre. On sait, en effet, que la résistance d'un tel fil de silice est très rapidement compromise par la présence de micro-fissures de surface, ce qui rend inexploitable une solution consistant à utiliser un fil de silice stocké préalablement.

Le procédé de l'invention consiste donc à fabriquer un élément de renforcement composite, en particulier un câble de renforcement composite, caractérisé en ce que :

- on file une matière non-métallique dans une zone de filage,

- on enrobe le fil en appliquant,directement à la sortie de la zone de filage en continu, autour dudit fil, le liant polymérisable ou thermoplastique, et simultanément ou non, les fibres de renforcement, et

- on durcit l'élément composite ainsi obtenu.

L'ensemble de ces opérations peut être mis en oeuvre en utilisant des dispositifs existant actuellement pour la fabrication de fibres optiques.

C'est pourquoi, lorsque la matière non-métallique est le verre ou la silice, le fil sera étiré à partir d'un barreau chauffé, par exemple par un four à induction en graphite.

L'enrobage est effectué comme cela est connu par exemple dans les techniques dites "à enroulement filamentaire continu". Toutefois, dans ce genre de techniques utilisées notamment pour fabriquer des tuyaux, les polymères renforcés sont disposés en continu sur un mandrin.

Dans le cas présent, le fil central sert, en quelque sorte, de matrice. Il facilite tout à la fois le positionnement des fibres de renforcement et l'amalgame et la pénétration du liant polymère en évitant, en outre, une polymérisation à coeur. Ceci permet la réalisation de câbles de renforcement à des vitesses élevées, ce qui n'était pas possible par les techniques de préparation actuellement utilisées.

Suivant la matière du liant polymère, l'opération d'enrobage pourra varier ; si le liant est un polymère réticulable (cas des résines époxyacrylates),le liant sera déposé sur le fil central, soit sous forme de monomère, soit sous forme prépolymérisée mais non durcie. Les fibres de renforcement pourront être disposées autour du fil central avant, après ou pendant le dépôt du liant polymère. Bien entendu, comme cela est connu dans la technique des polymères renforcés, les fibres peuvent être préimprégnées de liant si cela est nécessaire.

Pour appliquer autour du fil central, le liant polymère renforcé, dans la disposition des fibres choisie, on peut utiliser un dispositif de filière double employé usuellement dans le domaine de la tréfilerie, alimenté, de préférence en continu, en liant polymère et en fibre de renforcement. Cette filière alimentée en continu assure d'une part une bonne liaison entre les fibres, le liant et le fil central, par l'absence de bulles, d'autre part un calibrage régulier de l'élément composite obtenu.

Selon une variante de ce procédé on peut, avant de disposer les fibres et le liant, enduire préalablement le fil de liant polymère, afin de garantir une meilleure protection du fil central contre l'abrasion par les fibres de renforcement.

Dans ce cas, pour réaliser une préenduction du fil central, on dispose, en amont de la filière double, à la sortie de la zone de filage, un dispositif d'enrobage du fil central à alimentation continue en liant polymère suivi d'un dispositif de réticulation, comme un four, dans le cas d'une résine réticulable ou une zone de refroidissement dans le cas du polymère thermoplastique.

Afin de disposer les fibres de renforcement dans la disposition choisie autour du fil central, la filière comporte en amont au moins un dispositif d'alimentation en fibre de renforcement qui porte les bobines de stockage des fibres.

Si l'on veut disposer certaines fibres en hélice, ces dispositifs d'alimentation en fibres sont tournants, la vitesse de rotation des dispositifs déterminant alors, en relation avec la vitesse de défilement du fil central, le pas de l'hélice.

Dans le cas où les fibres de renforcement sont toronnées, d'autres dispositifs tels que des peignes peuvent équiper les dispositifs d'alimentation en fibre, ce qui par l'aplatissement des torons permet une meilleure pénétration de la résine et assure une meilleure cohésion à l'élément de renforcement obtenu.

L'élément composite ainsi formé sera durci dans l'étape ultérieure par un processus adapté à la nature et à la composition du polymère. Par exemple, la réticulation pourra être effectuée par chauffage par effet Joule ou par micro-ondes, le câble passant dans un four, ou bien une réticulation par ultra-violet par passage du câble dans un dispositif adéquat. Si cela est nécessaire, le liant polymérisable pourra d'ailleurs contenir des composants susceptibles d'améliorer la réticulation, tels que des durcisseurs ou des accélérateurs ou retardateurs de réticulation.

Dans le cas où le liant polymère utilisé est une résine thermoplastique, elle sera utilisée sous forme fondue et les fibres seront appliquées avec une certaine pression pour pénétrer dans le polymère. Dans ce cas, l'étape de durcissement pourra être simplement une étape de refroidissement.

La vitesse de fabrication est seulement limitée par l'étape de durcissement du liant.

Après l'étape de durcissement, on stocke l'élément composite obtenu en l'enroulant sur un tambour de stockage dont la vitesse d'enroulement règle la vitesse de filage du fil central, donc de défilement du fil central, c'est-à-dire la vitesse de fabrication de l'élément composite.

Cette vitesse d'enroulement est régulée de façon à garantir à l'ensemble une bonne stabilité dimensionnelle.

On peut en outre envisager, après l'étape de durcissement, une étape d'enrobage de l'élément composite obtenu par une fine couche de polymère. Après l'étape de durcissement, l'élément composite obtenu passe alors dans un applicateur de résine suivi d'un four ou d'une zone de séchage ou de refroidissement avant de s'enrouler sur un tambour de stockage. Le polymère choisi pour cet enrobage ultérieur peut être semblable au liant polymère, ou au contraire différent du liant polymère, sa nature dépendant de l'utilisation ultérieure de l'élément enrobé. On peut ainsi améliorer la tenue en température de l'élément composite enrobé, ou sa compatibilité avec d'autres matériaux.

L'invention concerne enfin un dispositif permettant la mise en oeuvre du procédé précédent. Il s'agit d'un dispositif comportant :

- un ensemble de filage d'un fil de verre ou de silice à partir d'un barreau chauffé,

- éventuellement, un ensemble d'enduction du fil et des moyens de durcissement du fil enduit,

- un ensemble d'enrobage dudit fil, à la sortie de l'ensemble de filage, comportant une filière au travers de laquelle passe le fil, ladite filière comportant des moyens d'enrobage du fil par un liant polymérisable ou thermoplastique et dispositif d'amenée de fibres de renforcement continues, et

- des moyens de durcissement du fil enrobé.

D'autres avantages de l'invention apparaîtront au cours de la description détaillée suivante et sur les dessins annexés.

Les figures 1 et 3 représentent, des vues en bout d'exemples d'éléments composites selon l'invention.

Les figures 2 et 4 sont des représentations schématiques des coupes longitudinales de ces mêmes éléments composites. Elles n'ont pas été hachurées intentionnellement pour la clarté des représentations.

La figure 5 donne une représentation simplifiée d'une variante de mise en oeuvre du procédé selon l'invention.

Les figures 6 et 7 représentent, en coupe, des exemples de réalisation de câble optique où sont utilisés des éléments de renforcement composite selon l'invention.

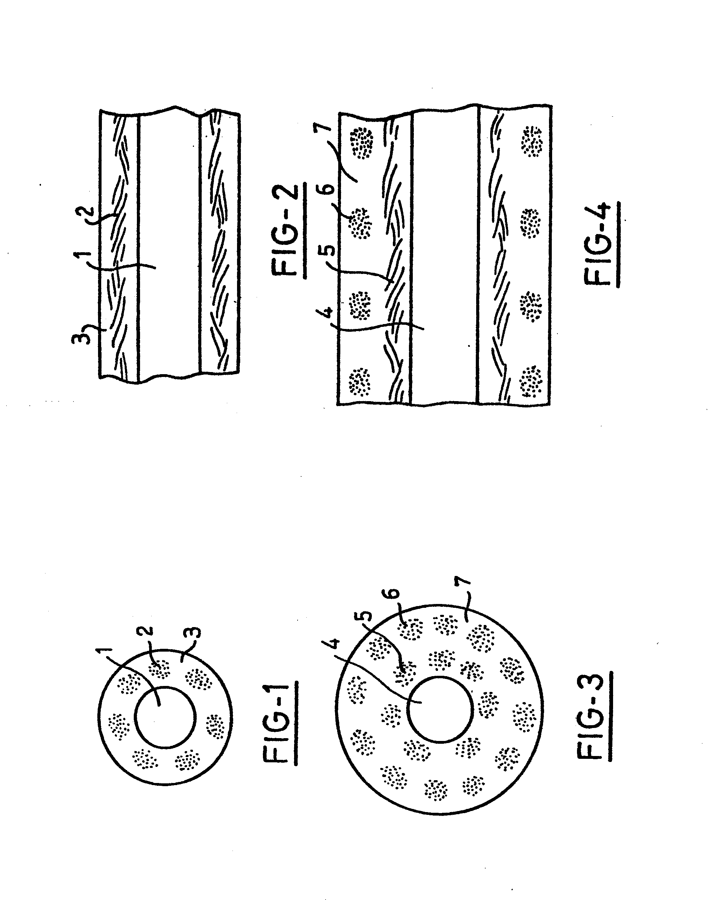

On a réalisé des éléments de renforcement composite dont les structures apparaissent clairement sur les figures 1 à 4 annexées.

Dans un premier mode de réalisation reporté sur les figures 1 et 2, le fil central 1 en verre ou en silice est enrobé dans une résine époxyacrylate 3 polymérisée par des rayonnements ultra-violets. Les fibres de renforcement toronnées telles que 2 sont noyées dans cette résine 3 et disposées en une couche, parallèlement à l'axe du fil 1.

Les figures 3 et 4 représentent un autre mode de réalisation des éléments de renforcement où les fibres de renforcement toronnées telles que 5 sont disposées parallèlement au fil central 4 sur une première couche, la deuxième couche de fibres de renforcement telles que 6 étant disposées en hélice selon un cylindre co-axial de même axe que le fil central 4, ces fibres 5 et 6 étant noyées dans une résine 7.

Les figures 1-2 et 3-4 représentent des exemples de dispositions très simples des fibres de renforcement autour du fil central. On comprendra que selon l'invention, on peut réaliser de nombreuses variantes à partir de la disposition longitudinale et de la disposition torsadée, et en multipliant les couches.

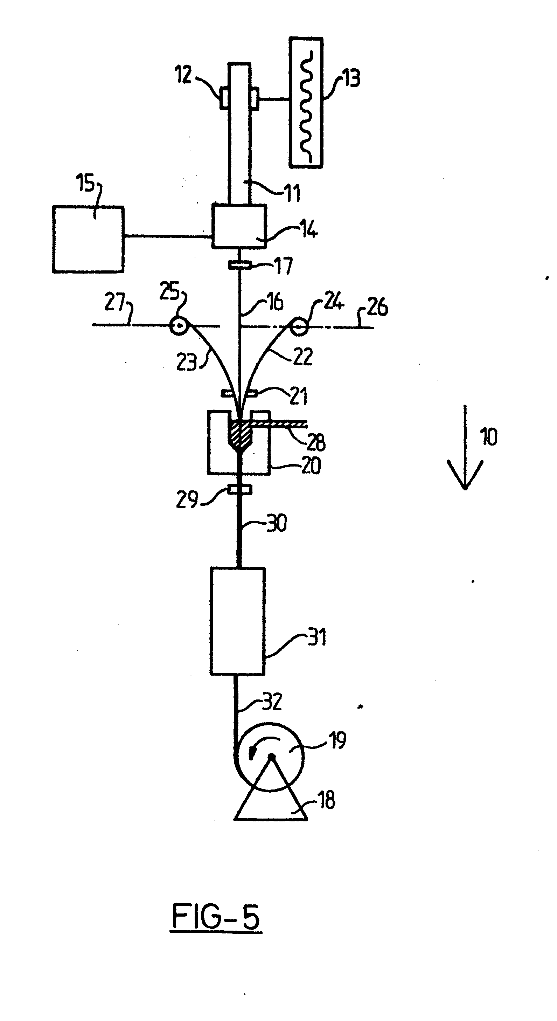

Pour la fabrication de tels éléments de renforcement composite, la Demanderesse a mis au point un procédé dont la figure 5 donne une représentation schématique. Il s'agit dans cet exemple de la fabrication d'éléments de composite de structure simple comme celle de l'élément représenté aux figures 1-2, à disposition longitudinale. Le liant est ici une résine polymérisable aux ultra-violets.

La flèche 10 indique le sens de défilement, le dispositif étant de préférence placé verticalement selon l'axe de défilement.

La barre de verre ou de silice utilisée 11 est maintenue par un porte-barreau 12. Le porte-barreau 12 est relié à un dispositif mécanique de descente lente 13, qui permet au barreau de pénétrer à une vitesse contrôlée dans un four 14 à induction graphite, fonctionnant à partir d'un générateur 15. Ce type de four équipe de façon classique les machines à fibrer les fibres optiques utilisées notamment pour des applications de transmission en télécommunication. Ce four porte la silice ou le verre à la température voulue pour la fusion et le filage d'un fil 16. Un détecteur 17 permet de mesurer le diamètre du fil étiré, ce détecteur étant relié au système 18 de régulation de la vitesse de tambour 19, afin d'éviter les variations de diamètre du fil central 16.

Le fil central 16 pénètre alors à sa sortie de la zone de filage dans la filière 20 sans avoir subi d'agression chimique ou mécanique. La filière 20 est équipée à son entrée d'un dispositif de commettage 21 qui concentre les fibres 22 et 23 provenant de bobines de stockage 24 et 25. Les bobines de stockage 24 et 25 sont placées sur des dispositifs d'alimentation 26 et 27. Ces dispositifs d'alimentation 26 et 27 sont fixes, dans le cas où les fibres de renforcement sont disposées de façon parallèle au fil central dans l'élément composite obtenu. Afin d'assurer une bonne mise en place des fibres autour du fil central, un
dispositif de frein mécanique ou électromécanique équipe
chacune des bobines de stockage. La filière 20 comporte
en outre un dispositif d'alimentation 28 en résine époxyacrylate. La filière 20 est alimentée en continu en résine
par un dispositif approprié non représenté. La filière 20
est de plus munie facultativement d'un dispositif de calibrage 29 qui assure un diamètre constant à l'élément de
renforcement 30 avant la polymérisation de la résine. A
la sortie de la filière, l'élément composite 30 entre dans
un four à ultra-violets 31 qui assure la polymérisation de
la résine. L'élément de renforcement composite calibré et
polymérisé 32 est enroulé sur le tambour de tirage 19
dont la vitesse est réglée de façon à garantir à l'ensemble
une bonne stabilité dimensionnelle.

Dans le cas où les fibres de renforcement seraient
enroulées en hélice autour du fil central, les dispositifs
de fixation 26 et 27 des bobines 24 et 25 sont tournants,
et leur vitesse de rotation est contrôlée et peut varier
en fonction du pas de torsadage souhaité et de la vitesse
de défilement du fil central, ces vitesses étant régulées
à partir de la vitesse de rotation du tambour d'étirage
19.

Dans une variante de mise en oeuvre du procédé, la
Demanderesse a adjoint aux dispositifs décrits ci-dessus,
afin de garantir une meilleure protection du fil central
16 contre l'abrasion éventuelle des éléments de renforcement,
un dispositif d'enduction du fil 6 directement à la sortie
du four 14, avant son entrée dans la filière 20. Ce dispositif comprend une filière simple alimentée en continu en
résine époxyacrylate, qui dépose une couche de résine
d'environ 10 µm d'épaisseur sur le fil central 16. Le
dispositif comprend également un four U.V. qui durcit la résine enduisant le fil avant que le fil enduit ne pénètre dans la filière 20.

Dans une autre variante de mise en oeuvre du procédé, la Demanderesse a adjoint aux dispositifs décrits ci-dessus (dispositif d'enduction y compris ou non), un dispositif d'enrobage de l'élément de renforcement obtenu à la sortie du four 31. Ce dispositif comprend une filière simple alimentée en polymère et un four assurant la polymérisation ou le séchage du polymère appliqué, avant que l'élément de renforcement composite enrobé obtenu ne soit enroulé sur le tambour 19.

Dans une autre variante de mise en oeuvre du procédé, les fibres toronnées provenant des bobines de stockage passent, avant leur mise en place autour du fil central, dans un peigne qui aplatit les torons et garantit une meilleure pénétration de la résine et donc une meilleure cohésion à l'ensemble.

Dans le cas de résines durcissables par une autre technique, le (s) four (s) à U.V. est (sont) remplacé (s) par des dispositif(s) convenables (s), four(s) à micro-ondes, four(s) à effet Joule, ou par une (des) zones(s) de refroidissement dans le cas de polymères thermoplastiques.

Bien entendu, les différents paramètres du procédé sont contrôlés et comparés pour obtenir un élément de renforcement ayant une bonne stabilité dimensionnelle.

L'ensemble constitue aussi une machine intégrée garantissant une bonne stabilité du diamètre extérieur de l'élément 32 par la filière 20 dont le diamètre extérieur a été contrôlé en fonction d'une vitesse moyenne de défilement. Cette vitesse moyenne de défilement garantit, après ajustement de la vitesse de descente du porte-barreau 12, une dimension du fil central avec des variations ne dépassant pas quelques microns ce qui par conséquent donnera à l'ensemble de l'élément une bonne stabilité mécanique et ce, d'autant plus que le fil nu 16 ne subit aucune agression mécanique avant son entrée dans la filière 20.

L'ensemble de ces données, vitesse de descente du barreau, diamètre du barreau, diamètre du fil 16, diamètre de la filière, vitesse d'enroulement sur le tambour 19 sont très facilement programmables comme sur les machines de cablerie classiques et ce procédé, par la présence du fil central et la possibilité d'appliquer des résines telles que des résines époxyacrylates polymérisables aux ultra-violets, permet d'atteindre des vitesses de 20 à 150 m/min. selon la taille de l'élément.

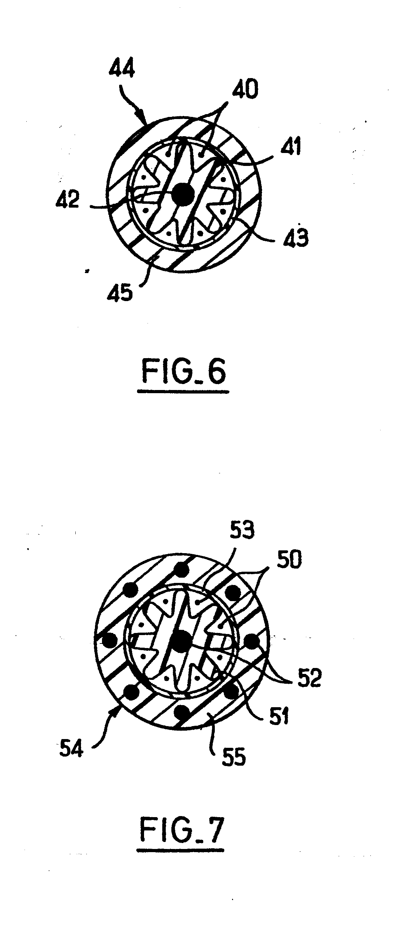

Les figures 6 et 7 représentent à titre de simple illustration, des câbles à fibres optiques renforcés par des éléments de renforcement selon l'invention.

Sur la figure 6, les fibres optiques 40 sont placées dans les rainures d'un profilé 41 en plastique extrudé à rainures hélicoïdales. Au centre du profilé 41, est placé l'élément de renforcement composite, selon l'invention, 42. Le profilé 41 est pourvu d'un rubanage 43 et le câble 44 est pourvu en outre d'une gaine de protection 45 en PEHD.

Dans un mode de réalisation voisin, l'élément de renforcement composite 42 peut être remplacé par plusieurs éléments de renforcement composites torsadés. De même, le nombre de rainures du profilé 41 et de fibres 40 placées dans les rainures peut varier.

Sur la figure 7, apparaît, en coupe, un câble à fibres optiques. Les fibres 50 sont placées dans les rainures d'un profilé plastique extrudé 51, au centre duquel est placé un élément de renforcement composite 52. Le profilé est pourvu d'un rubanage 53, et la gaine de protection 55, en PEHD, par exemple, est elle-même renforcée par des éléments de renforcement 52 selon l'invention pour former le câble à fibres optiques 54.

Les fibres optiques peuvent être placées librement dans les rainures, éventuellement avec une légère surlongueur, ou les rainures peuvent être remplies de graisse utilisée usuellement pour cet usage.

## EXEMPLE :

Elément de renforcement composite.

On a réalisé selon l'invention un élément de renforcement de 0,7 mm de diamètre comportant un fil central de 250 μm de diamètre, sept fibres de renforcement toronnées en verre E de 230 μm de diamètre apparent, constituées de filaments (6 à 9 μm de diamètre) de masse linéaire 68 g/km et de résistance à la rupture 4,3 daN, le liant polymérisable étant une résine époxyacrylate polymérisée aux U.V.

Les caractéristiques de cet élément sont les suivantes :

- module d'élasticité        : 40 000 à 50 000 N/mm$^2$
- résistance à la rupture     : 40 daN soit or ≠100 daN/mm$^2$
- allongement à la rupture    : 2 à 2,5 %
- très bon comportement à la flexion.

Ce fil a été obtenu à une vitesse de 20 à 30 m/min.

REVENDICATIONS

1. Elément de renforcement composite, en particulier, câble de renforcement caractérisé en ce qu'il comporte une âme (1) constituée d'un fil de matière non métallique, ladite âme étant enrobée dans un polymère renforcé.

2. Elément de renforcement composite selon la revendication 1, caractérisé en ce que le fil central (1) est un fil de verre ou de silice.

3. Elément de renforcement composite selon la revendication 1 ou 2, caractérisé en ce que le polymère (3) est renforcé par des fibres de verre, de kevlar ou de carbone, de graphite ou de bore.

4. Elément de renforcement composite selon la revendication 3, caractérisé en ce que les fibres de verre (2) sont continues.

5. Elément de renforcement composite selon la revendication 4 caractérisé en ce que les fibres de verre sont monobrins, tressées, toronnées ou torsadées.

6. Elément de renforcement composite selon les revendications 1 à 5 caractérisé en ce que le polymère (3) utilisé est une résine réticulable.

7. Elément de renforcement composite selon la revendication 6, caractérisé en ce que le polymère (3) est une résine époxyacrylate polymérisée aux rayons ultraviolets, ou une résine polyester.

8. Elément de renforcement composite selon l'une des revendications 1 à 5, caractérisé en ce que le polymère est thermoplastique.

9. Elément de renforcement composite selon l'une des revendications 1 à 8, caractérisé en ce que les fibres de renforcement du polymère sont disposées autour du fil central parallèlement à l'axe du fil central et/ou en hélices de même axe que le fil central.

10. Elément de renforcement composite selon l'une des revendications 1 à 8, caractérisé en ce que les fibres de renforcement sont disposées selon un ou plusieurs cylindres co-axiaux de même axe que le fil central.

11. Procédé de fabrication en ligne d'un élément de renforcement composite, selon l'une des revendications 1 à 10, caractérisé en ce que :

a) on file une matière non métallique dans une zone de filage ;

b) on enrobe le fil en appliquant directement à la sortie de la zone de filage en continu autour dudit fil le liant polymérisable ou thermoplastique et simultanément ou non, les fibres de renforcement, et

c) on durcit l'élément composite ainsi obtenu.

12. Procédé selon la revendication 11, caractérisé en ce que à l'étape a) on file du verre ou de la silice par étirage d'une barre de verre ou de silice chauffée dans un four.

13. Procédé selon la revendication 11 ou 12, caractérisé en ce que dans l'étape b) on applique une résine époxy ou polyester et les fibres de renforcement autour du fil central et dans l'étape c) on polymérise le liant dans un four à effet Joule, à ultra-violets ou à micro-ondes.

14. Procédé selon l'une des revendications 11 ou 12, caractérisé en ce que dans l'étape b), on applique un liant thermoplastique à chaud et sous pression sur le fil central, et on applique simultanément ou non les fibres de renforcement dans le liant thermoplastique et dans l'étape c) on refroidit le liant thermodurcissable.

15. Procédé selon l'une des revendications 11 à 14, caractérisé en ce que, en outre, entre l'étape a) de filage et l'étape b) d'enrobage, on enduit le fil directement à la sortie de la zone de filage en appliquant en continu autour dudit fil un polymère réticulable ou thermoplastique et on durcit ce premier enduit du fil.

18        0192570

16. Procédé selon la revendication 13 ou 15, caractérisé en ce que la résine utilisée est une résine époxyacrylate durcie aux rayons ultra-violets.

17. Dispositif de mise en oeuvre du procédé selon
l'une des revendications 11 à 16 pour obtenir un élément
de renforcement composite caractérisé en ce qu'il comporte :

        - un ensemble de filage d'un fil de verre ou de silice
à partir d'un barreau chauffé ;

        - éventuellement, un ensemble d'enduction du fil et
des moyens de durcissement du fil enduit ;

        - un ensemble d'enrobage dudit fil à la sortie de
l'ensemble de filage, comportant une filière au travers
de laquelle passe le fil, ladite filière comportant des
moyens d'enrobage du fil par un liant polymérisable ou
thermoplastique et un dispositif d'amenée de fibres de
renforcement continues ; et

        - des moyens de durcissement du fil enrobé.

FIG-2

FIG-4

FIG-1

FIG-3

FIG-5

44    40

41

42

43

45

## FIG. 6

53
50

52

51

54

55

## FIG. 7

Office européen
des brevets

**RAPPORT DE RECHERCHE EUROPEENNE**

**0192570**
Numéro de la demande

EP 86 40 0335

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,D | PATENTS ABSTRACTS OF JAPAN, vol. 7, no. 180 (P-215) [1325], 9th August 1983, page 6 P 215; & JP - A - 58 82 205 (FURUKAWA DENKI KOGYO K.K.) 17-05-1983 * En entier * | 1,3,6, 7 | G 02 B 6/44 |
| A,D | FR-A-2 509 872 (PHILIPS) * Page 1, lignes 1-6; page 1, ligne 27 - page 3, ligne 22; page 4, ligne 6 - page 5, ligne 2; revendications; figure 1 * | 1-5,9, 10 | |
| A,D | EP-A-0 113 377 (FURUKAWA ELECTRIC) * Page 5, ligne 3 - page 6, ligne 5; page 20, ligne 7 - page 21, ligne 1; figures 2-5 * | 6,7,11 ,13,15 ,16 | |
| A,D | FR-A-2 483 628 (SUMITOMO LTD.) * Page 2, ligne 14 - page 4, ligne 32; figures * | 1,3,5- 7,11 | |
| A,D | US-A-4 331 378 (HARTIG) * Colonne 2, lignes 4-38 * | 2,12 | |

**DOMAINES TECHNIQUES RECHERCHES (Int. Cl.4)**

G 02 B

Le présent rapport de recherche a été établi pour toutes les revendications

| Lieu de la recherche | Date d'achèvement de la recherche | Examinateur |
|---|---|---|
| LA HAYE | 22-04-1986 | KEMSLEY E.E.K. |